# EUROPÄISCHE PATENTSCHRIFT

(11) **EP 0 593 941 B1**
(45) Veröffentlichungstag und Bekanntmachung des Hinweises auf die Patenterteilung: **15.03.1995**
(21) Anmeldenummer: 93115505.5
(22) Anmeldetag: 25.09.1993
(51) Int. Cl.: B23K 26/02, B23P 23/04, B23Q 3/155, B21D 28/00, B23D 31/00

(54) **Laser-Bearbeitungskopf und Zusatzeinrichtung für eine numerisch gesteuerte Werkzeugmaschine**
Laser operating head and auxiliary equipment for a numerically controlled tool machine
Tête d'usinage laser et dispositif supplémentaire pour une machine-outil à commande numérique

(30) Priorität: 22.10.1992 DE 4235592
(43) Veröffentlichungstag der Anmeldung: 27.04.1994
(73) Patentinhaber: ACLAS LASERTECHNIK + MASCHINENBAU GmbH, D-52078 Aachen (DE)
(72) Erfinder: Klose, Jürgen, D-52159 Roetgen (DE)
(74) Vertreter: Biermann, Wilhelm, Dr.-Ing.

(56) Entgegenhaltungen:
- EP-B- 0 158 866
- WO-A-92/16334
- PATENT ABSTRACTS OF JAPAN vol. 016, no. 529 (M-1332) 29. Oktober 1992 & JP-A-04 197 589 (AMADA CO LTD) 17. Juli 1992
- PATENT ABSTRACTS OF JAPAN vol. 006, no. 056 (M-121) 13. April 1982 & JP-A-56 168 918 (AMADA CO LTD) 25. Dezember 1981
- PATENT ABSTRACTS OF JAPAN vol. 015, no. 404 (M-1168) 15. Oktober 1991 & JP-A-03 165 983 (AMADA CO LTD) 17. Juli 1991

## Beschreibung

Die Erfindung betrifft einen Laser-Bearbeitungskopf für eine numerisch gesteuerte Werkzeugmaschine, der zum Zweck der Auswechslung gegen ein mechanisches Bearbeitungswerkzeug mit einem mit dem Werkzeugträger der Werkzeugmaschine kuppelbaren, dem Werkzeugschaft des mechanischen Bearbeitungswerkzeugs entsprechenden und die koaxiale Anordnung des Laser-Kopfes zur Achse des mechanischen Bearbeitungswerkzeugs erlaubenden Werkzeugschaft versehen ist. Die Erfindung betrifft ferner eine Zusatzeinrichtung für eine numerisch gesteuerte Werkzeugmaschine mit einem derartigen mit dem Werkzeugträger der Werkzeugmaschine kuppelbaren Laser-Bearbeitungskopf.

Aus der EP 0158866 B1 ist eine numerisch gesteuerte Werkzeugmaschine zur wahlweisen Bearbeitung eines Werkstücks mit einem mechanischen Bearbeitungswerkzeug oder mit einer Laser-Schneideinrichtung bekannt. Bei dieser bekannten Werkzeugmaschine sind das mechanische Bearbeitungswerkzeug, beispielsweise ein Stanzwerkzeug, und der Laser-Bearbeitungskopf jeweils mit einem gleich ausgebildeten Schaft versehen, mit dem sie in die Werkzeugaufnahme der Werkzeugmaschine eingesetzt werden. Wenn der Laser-Bearbeitungskopf in die Werkzeugaufnahme eingesetzt ist, entspricht die geometrische Achse des Laser-Kopfes der geometrischen Achse des mechanischen Bearbeitungswerkzeugs. Infolgedessen kann bei einer solchen Maschine unabhängig von dem jeweiligen Werkzeug dasselbe Programm verwendet werden.

Bei dieser bekannten Werkzeugmaschine ist der auswechselbare Laser-Bearbeitungskopf als in sich starre Vorrichtung ausgebildet. Er besteht aus einem zylinderförmigen Hohlkörper und umfaßt eine gegen das Werkstück gerichtete Düse und eine Linsenfassung mit einer Linse, durch die die Laserstrahlen auf das Werkstück fokussiert werden. Die Laserstrahlen werden über einen außerhalb des Laser-Kopfes angeordneten Umlenkspiegel in die Achsrichtung umgelenkt und durch den zylindrischen Hohlkörper hindurch auf die Linse gerichtet.

Auch aus der WO 92/16334 ist eine kombinierte Bearbeitungsmaschine bekannt, die wahlweise mit einem mechanmischen Fräswerkzeug oder mit einem Laserkopf versehen werden kann. In diesem Fall ist das in drei Dimensionen zu bearbeitende Werkstück auf einem X-Y-Schlitten gelagert, während eine in Rotation versetzbare Hohlwelle, die an ihrem unteren Ende entweder das spanabhebende Werkzeug oder den Laserkopf aufnimmt, in Z-Richtung steuerbar ist. Die Laserstrahlen werden über einen Umlenkspiegel, der oberhalb der Hohlwelle angeordnet ist, in die Achsrichtung der Hohlwelle umgelenkt und durch die Hohlwelle hindurch auf die in dem Laserkopf angeordnete Linse gerichtet. Diese Maschine ist dafür vorgesehen, abwechselnd eine spanabhebende Bearbeitung und eine Oberflächenhärtung eines dreidimensional zu bearbeitenden Werkstücks vorzunehmen.

Ebenfalls bekannt sind Stanzpressen, bei denen in den Werkzeughalter für das obere Stanzwerkzeug anstelle des Stanzwerkzeugs ein Laser-Schneidkopf einsetzbar ist. Mit einer derartigen Stanzpresse wird zunächst mit Hilfe des Laser-Schneidkopfes ein Schnittvorgang an dem Werkstück durchgeführt, und anschließend nach Auswechseln des Laser-Schneidkopfes gegen das Stanzwerkzeug der Stanzvorgang ausgeführt. Bei einer Stanzpresse dieser Art ist es aus JP-A-56 168 918 bekannt, die Position der Kondensorlinse für den Laserstrahl innerhalb ihrer Halterung entsprechend der Dicke des zu schneidenden Werkstücks zu verändern. Aus der JP-A-04 197 589 ist es bei einer solchen Stanzpresse bekannt, den Laser getrennt von der Bearbeitungsstation anzuordnen, und auch die Justiervorrichtung für den Laserstrahl außerhalb der Stanzpresse vorzusehen. Diese Justiervorrichtung umfaßt mehrere Spiegel, durch die der Laserstrahl in die richtige Richtung gelenkt wird.

Es ist ferner aus der JP-A-03 165 983 eine Einrichtung der eingangs genannten Art bekannt, bei der die Laserstrahlung von dem Laser mittels eines Lichtleitkabels auf den Laser-Bearbeitungskopf übertragen wird. In diesem Fall ist der Laser-Bearbeitungskopf in einem drehbaren Revolverkopf angeordnet. Innerhalb des Bearbeitungskopfes wird der Laserstrahl durch das Lichtleitkabel bis zur Kondensorlinse geleitet.

Der Erfindung liegt die Aufgabe zugrunde, eine Werkzeugmaschine der eingangs genannten Art dahingehend weiterzuentwickeln, daß eventuelle Verschiebungen der geometrischen Achse des Laserstrahls und/oder winkelmäßige Ablenkungen des Laserstrahls, die aufgrund von Dejustierungen im mechanischen und im optischen System einer solchen Maschine nicht immer vermeidbar sind, jederzeit auf verhältnismäßig einfache Weise korrigiert werden können.

Gemäß der Erfindung wird diese Aufgabe dadurch gelöst, daß der Laser-Bearbeitungskopf aus einem den Werkzeugschaft enthaltenden Teil und einem die Laseroptik enthaltenden Teil besteht, deren räumliche Lage zueinander einstellbar ist.

Mit Hilfe eines erfindungsgemäß ausgebildeten Laser-Bearbeitungskopfes ist es also möglich, gegebenenfalls erforderliche Justierungsmaßnahmen auf einfache Weise an dem Laser-Kopf selbst vorzunehmen, ohne daß an der Werkzeugmaschine als solcher irgendwelche Eingriffe vorgenommen werden müssen. Da der Laser-Kopf in der Regel leicht zugänglich ist, können solche Justierungsmaßnahmen ohne größeren Aufwand und verhältnismäßig schnell durchgeführt werden.

Bei dem Werkzeugschaft, mit dem der Laser-Bearbeitungskopf in die Werkzeugaufnahme, das heißt in das Kupplungsstück im Werkzeugträger, eingesetzt wird, kann es sich zweckmäßigerweise um einen Werkzeugschaft mit den genormten Abmessungen eines Werkzeugschaftes für ein spanabhebendes Werkzeug handeln, so daß der erfindungsgemäße Laser-Bearbeitungskopf in einen üblichen genormten Werkzeugträger einer Werkzeugmaschine eingespannt werden kann.

Vorteilhafterweise sind in Weiterbildung der Erfindung der den Werkzeugschaft enthaltende Teil und der die Laser-Optik enthaltende Teil des Laser-Bearbeitungskopfes über ein Pendellager miteinander verbunden, wobei die Winkellage der beiden Teile zueinander durch Justierschrauben einstellbar ist.

Bei Verbindung der beiden Teile des Laser-Bearbeitungskopfes über ein Pendellager ist zweckmäßigerweise die in dem den Werkzeugschaft aufweisenden Teil angeordnete Lagerschale des Pendellagers durch Justierschrauben senkrecht zur Achsrichtung des Werkzeugträgers der Werkzeugmaschine einstellbar.

Eine weitere vorteilhafte Ausgestaltung der Erfindung besteht darin, daß die Laserstrahlen von einem stationär angeordneten Laser auf den Laser-Bearbeitungskopf über ein Lichtleitkabel übertragen werden, das an den Laser-Bearbeitungskopf seitlich unter einem rechten Winkel zur Richtung des aus dem Laser-Bearbeitungskopf austretenden Laserstrahls angekoppelt ist, und daß zum Umlenken der Laserstrahlen in die axiale Richtung des Werkzeugträgers ein optisches System in dem Laser-Bearbeitungskopf angeordnet ist.

Die Erfindung kann insbesondere auch in der Weise verwirklicht werden, daß ein Nachrüstsatz für eine numerisch gesteuerte Werkzeugmaschine bereitgestellt wird, der einen mit einem mit dem Werkzeugträger der Werkzeugmaschine kuppelbaren Werkzeugschaft versehenen Laser-Bearbeitungskopf, einen mit dem Laser-Bearbeitungskopf über ein Lichtleitkabel verbundenen Laser, eine den Laser-Bearbeitungskopf in der Wartestellung aufnehmende Werkzeugbox und eine den Laser und die Werkzeugmaschine ansteuernde Steuerschaltung umfaßt, wobei der Laser-Bearbeitungkopf aus einem den Werkzeugschaft enthaltenden Teil und einem die Laseroptik enthaltenden Teil besteht, deren räumliche Lage zueinander einstellbar ist, daß der Laser-Bearbeitungskopf einen Kontrollschalter zur Kontrolle der Einspannung und einen Lagesensor zur Erkennung der Einspannlage aufweist, und daß der Kontrollschalter und/oder der Lagesensor eine einen Teil der Steuerschaltung bildende Sicherheitsschaltung für die Einschaltung des Lasers ansteuern.

Durch einen derartigen Nachrüstsatz kann praktisch jede für die rein mechanische Bearbeitung eines Werkstücks ausgerüstete Werkzeugmaschine in außerordentlich kostengünstiger Weise kurzfristig in eine Laser-Bearbeitungsmaschine umgerüstet werden. Durch Auswechseln des Laser-Bearbeitungskopfes gegen ein mechanisches Bearbeitungswerkzeug kann die Maschine kurzfristig wieder in eine mechanische Bearbeitungsmaschine umgewandelt werden.

Weitere vorteilhafte Weiterbildungen der Erfindung ergeben sich aus den Unteransprüchen und aus der nachfolgenden Beschreibung eines bevorzugten Ausführungsbeispiels anhand der Zeichnungen.

Von den Zeichnungen zeigt
- Fig. 1: eine erfindungsgemäße Zusatzeinrichtung für eine numerisch gesteuerte Werkzeugmaschine in einer schematischen Gesamtdarstellung, und
- Fig. 2: den erfindungsgemäßen Laser-Bearbeitungskopf, teilweise im Schnitt.

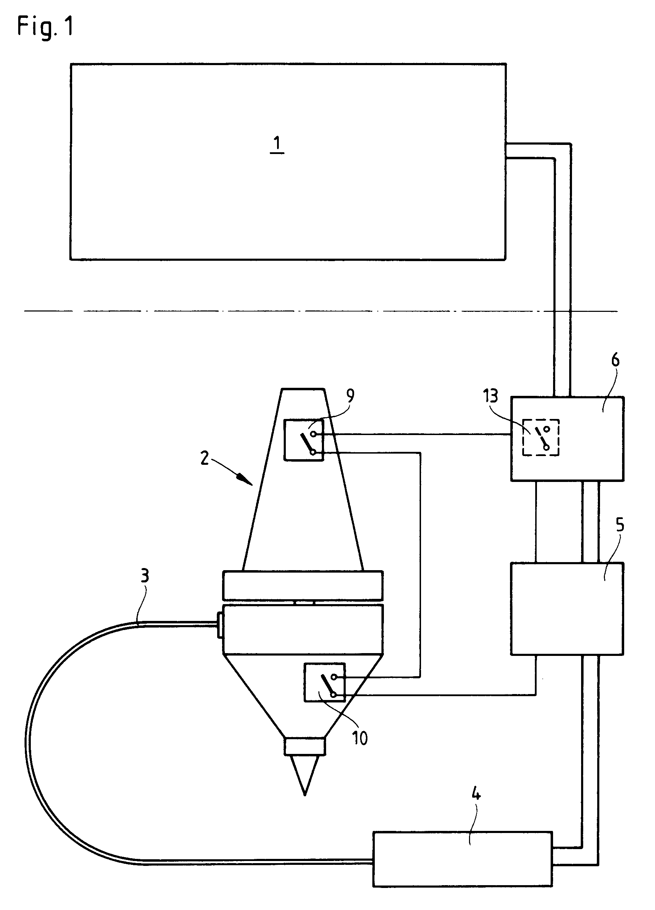

In der schematischen Darstellung der Fig. 1 ist die Werkzeugmaschine 1 beispielsweise eine numerisch gesteuerte Fräsmaschine, bei der ein Kreuzschlitten mit einem Werkzeugträger versehen ist, der eine innerhalb des Werkzeugträgers konzentrisch zu diesem angeordnete und von einem Elektromotor angetriebene Werkzeugspindel aufweist. Die Werkzeugspindel ist mit dem rotierenden Fräswerkzeug gekoppelt, sobald das Fräswerkzeug in dem Werkzeugträger befestigt ist. Stattdessen kann aber auch die in Drehung versetzbare Werkzeugspindel als solche unmittelbar als Werkzeugträger dienen. Bei der Werkzeugmaschine 1 kann es sich aber auch beispielsweise um eine numerisch gesteuerte Drehbank handeln, bei der das Werkzeug auf einem Kreuzschlitten angeordnet ist und längs und quer zur Drehachse des eingespannten und in Rotation versetzten Werkstücks verschoben wird.

Im Fall einer CNC-Fräsmaschine, für die die Erfindung im folgenden näher beschrieben wird, erfolgt mit Hilfe der numerischen Steuerung, die bei der schematischen Darstellung in die Werkzeugmaschine 1 integriert ist, sowohl die X-Y-Wegsteuerung des Kreuzschlittens als auch die Ansteuerung des Antriebsmotors für die Werkzeugspindel und die Ansteuerung der übrigen Antriebsmotoren, beispielsweise des Antriebsmotors für die Kühlflüssigkeit bei der mechanischen Bearbeitung und des Antriebsmotors des das Arbeitsgas liefernden Ventilators beim Einsatz des Laser-Bearbeitungskopfes.

Der Werkzeugträger der Fräsmaschine ist mit einer genormten Spannkupplung versehen, beispielsweise für einen SK40-Steilkegel. Insoweit handelt es sich vorzugsweise um eine übliche Werkzeugmaschine, wie sie für die spanabhebende Bearbeitung von Werkstücken Verwendung findet und auf dem Markt erhältlich ist.

Mit dem Werkzeugträger der Werkzeugmaschine 1 wird anstelle eines üblichen spanabhebenden Bearbeitungswerkzeugs der mit einem dem Kupplungsstück des Werkzeugträgers entsprechenden Werkzeugschaft versehene Laser-Bearbeitungskopf 2 verspannt, dessen Aufbau später noch im einzelnen beschrieben wird. An den Laser-Bearbeitungskopf 2 ist ein flexibles Lichtleitkabel 3 angekoppelt, durch das die im Laser 4 erzeugten Laserstrahlen dem Laser-Bearbeitungskopf 2 zugeführt werden. Der Laser 4 kann an geeigneter Stelle an der Werkzeugmaschine 1 ortsfest angeordnet werden.

Um den ordnungsgemäßen Betrieb der Maschine zu gewährleisten und um mögliche Gefahrenquellen auszuschließen, ist außer dem Laser-Bearbeitungskopf 2, dem Laser 4 und der Laser-Steuerung 5 eine Sicherheitseinrichtung vorgesehen, die eine Werkzeugbox 6 umfaßt und mit der Laser-Steuerung 5 verbunden ist. Die Werkzeugbox 6 dient dazu, den Laser-Bearbeitungskopf 2 aufzunehmen, wenn er nicht benutzt wird und nicht mit dem Werkzeugträger verspannt ist. Zu diesem Zweck ist die Werkzeugbox auf ihrer Oberseite mit einer dem Laser-Bearbeitungskopf 2 angepaßten Vertiefung versehen, in die der Laser-Kopf 2 eingesetzt wird. In der Werkzeugbox 6 sind ein oder mehrere Sicherheitsschalter 13 angeordnet, die durch den Laser-Kopf 2 betätigt werden, wenn dieser sich in der Werkzeugbox befindet. Zu der Sicherheitseinrichtung gehören ferner ein in dem Laser-Kopf 2 angeordneter Kontrollschalter 9. Dieser Kontrollschalter 9 erkennt, ob der Laser-Kopf 2 ordnungsgemäß im Werkzeugträger eingespannt ist. Ferner gehört zu der Sicherheitseinrichtung ein Lagesensor 10, der nur dann aktiviert wird, wenn der den Laserstrahl aussendende Teil des Laser-Kopfes 2 exakt in der gewünschten Arbeitsstellung ausgerichtet ist, in der die Bedienungsperson und die Umgebung der Maschine durch geeignete Sicherheitsvorkehrungen geschützt sind.

Der bzw. die Sicherheitsschalter 13 in der Werkzeugbox 6, der Kontrollschalter 9 in dem den Werkzeugschaft aufweisenden Teil des Laser-Kopfes 2 und der Lagesensor 10 in dem die Laser-Optik enthaltenden Teil des Laser-Kopfes 2 sind in einem gemeinsamen Sicherheitskreis derart miteinander verknüpft, daß die folgenden Sicherheitskriterien erfüllt sind:
a) Der Laser 4 kann nicht eingeschaltet werden, solange der Laser-Kopf 2 sich in der Werkzeugbox 6 befindet;
b) der Laser 4 kann nur dann eingeschaltet werden, wenn der Kontrollschalter 9 im Laser-Kopf 2 geschlossen ist, das heißt, wenn der Laser-Kopf 2 in der Werkzeugmaschine eingespannt ist;
c) der Laser 4 kann ferner nur dann eingeschaltet werden, wenn die Kontakte des Lagesensors 10 im Laser-Kopf 2 geschlossen sind, und
d) der Antriebsmotor für eine Arbeitsspindel kann nur dann eingeschaltet werden, wenn sich der Laser-Bearbeitungskopf 2 in der Werkzeugbox 6 befindet, sofern es sich um eine Werkzeugmaschine mit sich drehender Arbeitsspindel handelt.

Durch den diese Kriterien erfüllenden Sicherheitskreis wird sichergestellt, daß einerseits die Bedienungsperson der Maschine und das Arbeitsumfeld durch den Laserstrahl nicht gefährdet werden, da der Laser 4 solange nicht eingeschaltet werden kann, wie der Laser-Kopf 2 nicht fest eingespannt ist und der Laserstrahl nicht die gewünschte Richtung aufweist, das heißt bei einer Fräsmaschine nicht genau nach unten ausgerichtet ist. Andererseits wird zusätzlich sichergestellt, daß die Arbeitsspindel, und damit der Laser-Kopf 2, in seiner Arbeitsstellung nicht in Drehung versetzt wird.

Die von dieser Sicherheitsschaltung kommenden Steuersignale können zweckmäßigerweise noch andere zusätzliche Funktionen übernehmen. So können diese Steuersignale außer zum Ein- und Ausschalten des Lasers und des Antriebsmotors der Arbeitsspindel noch zum Ein- und Ausschalten des Antriebsmotors der Kühlmittelpumpe und zum Ein- und Ausschalten des Antriebsmotors der das Arbeitsgas für den Laser-Kopf fördernden Gaspumpe benutzt werden. Mit diesen von der Sicherheitsschaltung kommenden Steuersignalen können mit anderen Worten auch andere Einrichtungen der Werkzeugmaschine umgeschaltet werden, deren Umschaltung beim Wechsel vom mechanischen Betrieb der Maschine auf den Laser-Betrieb, und umgekehrt, erforderlich oder zweckmäßig ist.

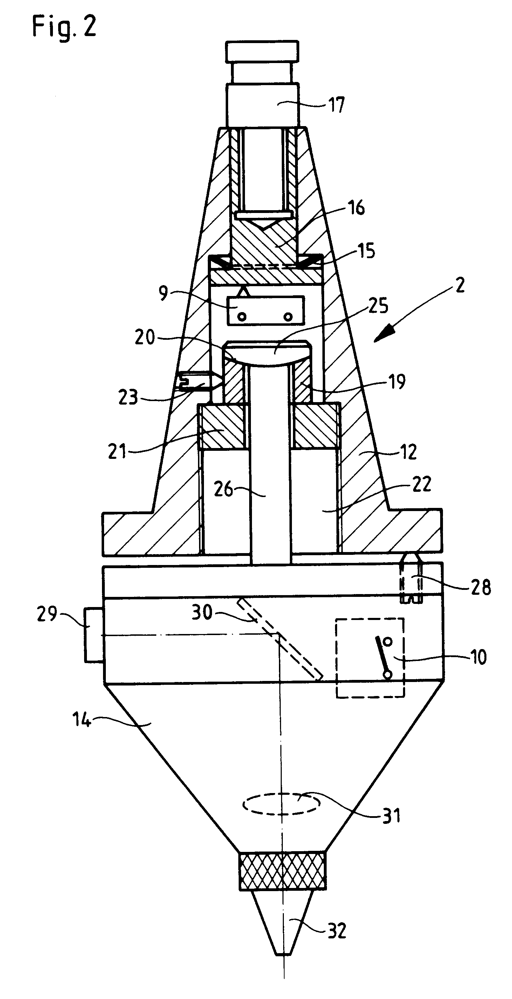

Der Aufbau des Laser-Bearbeitungskopfes 2 ergibt sich im einzelnen aus der Fig. 2. Er umfaßt zwei Teile, die in einem bestimmten Ausmaß miteinander beweglich verbunden sind, nämlich den eigentlichen Werkzeugschaft 12 und einen unteren Teil 14, der die Laser-Optik enthält. Innerhalb des Werkzeugschaftes 12 ist ein mit einer Tellerfeder 15 belasteter Schieber 16 angeordnet, in dem der mit einer ringförmigen Spannut versehene Spannaufnehmer 17 sitzt. Unterhalb des Schiebers 16 ist innerhalb des Werkzeugschaftes 12 der Kontrollschalter 9 angeordnet, der durch den Schieber 16 betätigt wird, wenn der Werkzeugschaft 12 ordnungsgemäß eingespannt ist.

Innerhalb des Werkzeugschaftes 12 befindet sich das Pendellager für die Lagerung des unteren, die Laser-Optik aufweisenden Teils 14. Das Pendellager umfaßt eine Lagerschale 19 in Form eines Hohlzylinderkörpers, dessen obere Lagerfläche 20 hohlkugelförmig ausgebildet ist. Die Lagerschale 19 ruht auf einer mit Außengewinde versehenen Scheibe 21, die in eine entsprechende Gewindebohrung im Werkzeugschaft eingeschraubt ist. Mit Hilfe von beispielsweise drei radial im Werkzeugschaft angeordneten Schrauben 23 kann die Lagerschale 19 einjustiert werden, so daß der aus dem Laser-Kopf austretende Laserstrahl koaxial zur Spindeldrehachse der Werkzeugmaschine verläuft.

Auf der Lagerschale 19 ruht ein kugelkalottenförmiges Lagerstück 25, an dem eine Stange 26 befestigt ist, die ihrerseits an dem die Laser-Optik aufweisenden unteren Teil 14 befestigt ist. Der untere Teil 14 des Laser-Kopfes 2 ist auf diese Weise in allen Richtungen pendelnd gelagert. Die Winkelstellung des unteren Teils 14, und damit die genaue Ausrichtung des Laserstrahls, kann mit Hilfe von beispielsweise drei Schrauben 28 einjustiert werden.

Das von dem Laser kommende Lichtleitkabel wird seitlich an den unteren Teil 14 des Laser-Kopfes angeschlossen. Zu diesem Zweck ist seitlich eine Anschlußbuchse 29 vorgesehen, in die der Stecker des Lichtleitkabels eingeführt wird. Die Laserstrahlen treffen auf den in dem unteren Teil 14 angeordneten Umlenkspiegel 30 und werden von diesem auf eine Linse oder ein Linsensystem 31 umgelenkt, durch das die Laserstrahlen fokussiert werden. Im dargestellten Fall ist der Laser-Kopf mit einer Schneiddüse 32 versehen, durch die einerseits der Laserstrahl und andererseits ein Arbeitsgas austritt. Der Einfachheit halber ist der Anschluß für das Arbeitsgas in der Zeichnung nicht dargestellt. Anstelle einer Schneiddüse kann beispielsweise auch ein Schweißvorsatz eingesetzt werden.

## Patentansprüche

1. Laser-Bearbeitungskopf (2) für eine numerisch gesteuerte Werkzeugmaschine (1), der zum Zweck der Auswechslung gegen ein mechanisches Bearbeitungswerkzeug mit einem mit dem Werkzeugträger der Werkzeugmaschine kuppelbaren, dem Werkzeugschaft des mechanischen Bearbeitungswerkzeugs entsprechenden und die koaxiale Anordnung des Laserstrahls zur Achse des mechanischen Bearbeitungswerkzeugs erlaubenden Werkzeugschaft (12) versehen ist, **dadurch gekennzeichnet,** daß der Laser-Bearbeitungskopf (2) aus einem den Werkzeugschaft (12) enthaltenden Teil und einem die Laseroptik (30,31) enthaltenden Teil (14) besteht, deren räumliche Lage zueinander einstellbar ist.

2. Laser-Bearbeitungskopf nach Anspruch 1, dadurch gekennzeichnet, daß der den Werkzeugschaft (12) enthaltende Teil und der die Laseroptik (30,31) enthaltende Teil (14) des Laser-Bearbeitungskopfes (2) über ein Pendellager (19,25,26) miteinander verbunden sind, und daß die Winkellage der beiden Teile zueinander durch Justierschrauben (28) einstellbar ist.

3. Laser-Bearbeitungskopf nach Anspruch 2, dadurch gekennzeichnet, daß die in dem den Werkzeugschaft (12) aufweisenden Teil des Laser-Bearbeitungskopfes (2) angeordnete Lagerschale (19) des Pendellagers durch Justierschrauben (23) senkrecht zur Achsrichtung des Werkzeugträgers der Werkzeugmaschine (1) einstellbar ist.

4. Laser-Bearbeitungskopf nach einem der Ansprüche 1 bis 3, dadurch gekennzeichnet, daß im Laser-Bearbeitungskopf (2) ein bei Einspannung des Werkzeugschaftes (12) in den Werkzeugträger (12) betätigter Kontrollschalter (9) angeordnet ist.

5. Laser-Bearbeitungskopf nach einem der Ansprüche 1 bis 4, dadurch gekennzeichnet, daß in dem die Laseroptik (30,31) enthaltenden Teil (14) des Laser-Bearbeitungskopfes (2) ein Lagesensor (10) zur Erkennung der Einspannlage angeordnet ist.

6. Laser-Bearbeitungskopf nach Anspruch 4 oder 5, dadurch gekennzeichnet, daß der Kontrollschalter (9) und/oder der Lagesensor (10) Teile einer den Laser (4) ansteuernden Steuerschaltung (5) sind.

7. Laser-Bearbeitungskopf nach einem der Ansprüche 1 bis 6, dadurch gekennzeichnet, daß ein die Laserstrahlen von einem stationär angeordneten Laser (4) auf den Laser-Bearbeitungskopf (2) übertragendes Lichtleitkabel (3) an den Laser-Bearbeitungskopf (2) seitlich unter einem rechten Winkel zur Richtung des aus dem Laser-Bearbeitungskopf austretenden Laserstrahls angekoppelt ist, und daß im Laser-Bearbeitungskopf (2) ein optisches System (30) zum Umlenken der Laserstrahlen in die axiale Richtung des Werkzeugträgers vorgesehen ist.

8. Zusatzeinrichtung für eine numerisch gesteuerte Werkzeugmaschine, mit einem mit dem Werkzeugträger der Werkzeugmaschine (1) kuppelbaren Werkzeugschaft (12) versehenen Laser-Bearbeitungskopf (2), einem mit dem Laser-Bearbeitungskopf (2) über ein Lichtleitkabel (3) verbundenen Laser (4), einer den Laser-Bearbeitungskopf (2) in der Wartestellung aufnehmenden Werkzeugbox (6) und einer den Laser (4) und die Werkzeugmaschine (1) ansteuernden Steuerschaltung (5), dadurch gekennzeichnet, daß der Laser-Bearbeitungskopf (2) aus einem den Werkzeugschaft (12) enthaltenden Teil und einem die Laseroptik (30,31) enthaltenden Teil (14) besteht, deren räumliche Lage zueinander einstellbar ist, daß der Laser-Bearbeitungskopf (2) einen Kontrollschalter (9) zur Kontrolle der Einspannung und einen Lagesensor (10) zur Erkennung der Einspannlage aufweist, und daß der Kontrollschalter (9) und/oder der Lagesensor (10) eine einen Teil der Steuerschaltung (5) bildende Sicherheitsschaltung für die Einschaltung des Lasers (4) ansteuern.

9. Zusatzeinrichtung nach Anspruch 8, dadurch gekennzeichnet, daß in der Werkzeugbox (6) ein die Anwesenheit des Laser-Bearbeitungskopfes (2) erkennender und die Sicherheitsschaltung für die Einschaltung des Lasers (4) ansteuernder Schalter (13) angeordnet ist.

10. Zusatzeinrichtung nach Anspruch 8 oder 9, dadurch gekennzeichnet, daß der Schalter (13) in der Werkzeugbox (6), sowie der Kontrollschalter (9) und der Lagesensor (10) im Laser-Bearbeitungskopf (2) in einem gemeinsamen Sicherheitskreis miteinander verknüpft sind.

11. Zusatzeinrichtung nach Anspruch 8, 9 oder 10, dadurch gekennzeichnet, daß der Schalter (13) in der Werkzeugbox (6) und/oder der Kontrollschalter (9) und/oder der Lagesensor (10) Teile einer Steuerschaltung sind, durch die zusätzlich die Antriebe für andere Vorrichtungen angesteuert werden, die beim Umschalten vom mechanischen Betrieb der Maschine auf den Laser-Betrieb, und umgekehrt, ein- oder ausgeschaltet werden.

12. Zusatzeinrichtung nach einem der Ansprüche 8 bis 11 für eine numerisch gesteuerte Werkzeugmaschine mit einer angetriebenen Arbeitsspindel, dadurch gekennzeichnet, daß der Schalter (13) in der Werkzeugbox (6) Teil der Steuerschaltung (5) für den Antrieb der Werkzeugspindel ist, wobei die Steuerschaltung (5) den Antrieb für die Werkzeugspindel nur freigibt, wenn der Schalter (13) durch den in Wartestellung befindlichen Laser-Bearbeitungskopf (2) aktiviert ist.

## Claims

1. Laser processing head (2) for a numerically-controlled machine tool (1) which for the purpose of exchange with a mechanical processing tool is provided with a tool shaft (12) which is couplable with the tool carrier of the machine tool, corresponds with the tool shaft of the mechanical processing tool and permits coaxial arrangement of the laser beam relative to the axis of the mechanical processing tool, characterised thereby that the laser processing head (2) consists of a part containing the tool shaft (12) and a part (14) containing the laser optical system (30, 31), the spatial position of which parts is adjustable relative to one another.

2. Laser processing head according to claim 1, characterised thereby that the part, which contains the tool shaft (12), and the part (14), which contains the laser optical system (30, 31), of the laser processing head (2) are connected together by way of a pendulating bearing (19, 25, 26) and that the angular position of the two parts relative to one another is adjustable by adjusting screws (28).

3. Laser processing head according to claim 2, characterised thereby that the bearing shell (17), which is arranged in the part of the laser processing head (2) that has the tool shaft (12), of the pendulating bearing is adjustable by adjusting screws (23) vertically relative to the axial direction of the tool carrier of the machine tool (1).

4. Laser processing head according to one of claims 1 to 3, characterised thereby that a checking switch (9), which is actuated on clamping of the tool shaft (12) in the tool carrier (12), is arranged in the laser processing head (2).

5. Laser processing head according to one of claims 1 to 4, characterised thereby that a position sensor (10) for recognition of the clamped-in position is arranged in the part (14) of the laser processing head (2) that contains the laser optical system (30, 31).

6. Laser processing head according to claim 4 or 5, characterised thereby that the checking switch (9) and and/or the position sensor (10) are parts of a control circuit (5) controlling the laser (4).

7. Laser processing head according to one of claims 1 to 6, characterised thereby that an optical conductor cable (3) transferring the laser beam from a stationarily arranged laser (4) to the laser processing head (2) is coupled to the laser processing head (2) laterally at a right angle to the direction of the laser beam issuing from the laser processing head, and that an optical system (30) for deflection of the laser beams into the axial direction of the tool carrier is provided in the laser processing head (2).

8. Auxiliary equipment for a numerically-controlled machine tool, with a laser processing head (2) provided with a tool shaft (12) couplable to the tool carrier of the machine tool (1), a laser (4) connected with the laser processing head (2) by way of an optical conductor cable (3), a tool box (6) receiving the laser processing head (2) in the waiting position and a control circuit (5) controlling the laser (4) and the machine tool (1), characterised thereby that the laser processing head (2) consists of a part containing the tool shaft (12) and a part (14) containing the laser optical system (30, 31), the spatial position of which parts is adjustable relative to one another, that the laser processing head (2) comprises a checking switch (9) for checking of the clamping-in and a position sensor (10) for recognition of the clamped-in position, and that the checking switch (9) and/or the position sensor (10) control a safety circuit, which forms a part of the control circuit (5), for the switching on of the laser (4).

9. Auxiliary equipment according to claim 8, characterised thereby that a switch (13), which recognises the presence of the laser processing head (2) and controls the safety circuit for the switching on of the laser (4), is arranged in the tool box (6).

10. Auxiliary equipment according to claim 8 or 9, characterised thereby that the switch (13) in the tool box (6) as well as the checking switch (9) and the position sensor (10) in the laser processing head (2) are connected together in a common safety circuit.

11. Auxiliary equipment according to claim 8, 9 or 10, characterised thereby that the switch (13) in the tool box (6) and/or the checking switch (9) and/or the position sensor (10) are parts of a control circuit by which, in addition, the drives for other devices are controlled, which are switched on or switched off on changeover from mechanical operation of the machine to laser operation and conversely.

12. Auxiliary equipment according to one of claims 8 to 11 for a numerically-controlled machine tool with a driven work spindle, characterised thereby that the switch (13) in the tool box (6) is part of the control circuit (5) for the drive of the tool spindle, wherein the control circuit (5) frees the drive for the tool spindle only when the switch (13) is activated by the laser processing head (2) disposed in the waiting position.

## Revendications

1. Tête d'usinage à laser (2) pour une machine-outil à commande numérique (1), qui, en vue de son remplacement par un outil d'usinage mécanique, est pourvue d'une queue d'outil (12) pouvant être accouplée au porte-outil de la machine-outil, correspondant à la queue d'outil de l'outil d'usinage mécanique et permettant l'agencement coaxial du rayon laser par rapport à l'axe de l'outil d'usinage (12) mécanique, caractérisée en ce que la tête d'usinage à laser (2) est constituée d'une partie contenant la queue d'outil (12) et d'une partie (14) contenant l'optique laser (30, 31), les positions spatiales de ces deux parties pouvant être réglées l'une par rapport à l'autre.

2. Tête d'usinage à laser suivant la revendication 1, caractérisée en ce que la partie contenant la queue d'outil (12) et la partie (14) contenant l'optique laser (30, 31) de la tête d'usinage à laser (2) sont reliées l'une à l'autre au moyen d'un palier articulé (19, 25, 26) et la position angulaire des deux parties l'une par rapport à l'autre est réglable au moyen de vis de réglage (28).

3. Tête d'usinage à laser suivant la revendication 2, caractérisée en ce que la cuvette-coussinet (19) du palier articulé placée dans la partie de la tête d'usinage à laser (2) comportant la queue d'outil (12) est réglable perpendiculairement à la direction axiale du porte-outil de la machine-outil (1) au moyen de vis de réglage (23).

4. Tête d'usinage à laser suivant l'une quelconque des revendications 1 à 3, caractérisée en ce que dans la tête d'usinage à laser (2), est installé un commutateur de commande (9) actionné lors du serrage de la queue d'outil (12) dans le porte-outil.

5. Tête d'usinage à laser suivant l'une quelconque des revendications 1 à 4, caractérisée en ce que, dans la partie (14) de la tête d'usinage à laser (2) contenant l'optique laser (30, 31), est placé un capteur de position (10) pour la détection de la position serrée.

6. Tête d'usinage à laser suivant la revendication 4 ou 5, caractérisée en ce que le commutateur de contrôle (9) et/ou le capteur de position (10) font partie d'un circuit de commande (5) commandant le laser (4).

7. Tête d'usinage à laser suivant l'une quelconque des revendications 1 à 6, caractérisée en ce qu'un câble en fibres optiques (3), transmettant les rayons lasers d'un laser monté fixe (4) à la tête d'usinage à laser (2), est raccordé à la tête d'usinage à laser (2), latéralement à angle droit par rapport à la direction du rayon laser sortant de la tête d'usinage à laser, et un système optique (30) est prévu dans la tête d'usinage à laser (2) pour dévier les rayons lasers dans la direction axiale du porte-outil.

8. Dispositif supplémentaire pour une machine-outil à commande numérique, avec une tête d'usinage à laser (2) pourvue d'une queue d'outil (12) pouvant être accouplée au porte-outil de la machine-outil (1), un laser (4) relié à la tête d'usinage à laser (2) via un câble en fibres optiques (3), une boîte à outil (6) recevant la tête d'usinage à laser (2) dans la position d'attente et un circuit de commande (5) commandant le laser (4) et la machine-outil (1), caractérisé en ce que la tête d'usinage à laser (2) est constituée d'une partie contenant la queue d'outil (12) et d'une partie contenant l'optique laser (30, 31), dont les positions spatiales sont réglables l'une par rapport à l'autre que la tête d'usinage à laser (2) comporte un commutateur de contrôle (9) pour le contrôle du serrage et un capteur de position (10) pour la détection de la position serrée, et que le commutateur de contrôle (9) et/ou le capteur de position (10) commandent un circuit de sécurité faisant partie du circuit de commande (5) pour la mise sous tension du laser (4).

9. Dispositif supplémentaire suivant la revendication 8, caractérisé en ce que dans la boîte à outil (6) est placé un commutateur (13) détectant la présence de la tête d'usinage à laser (2) et commandant le circuit de sécurité pour la mise sous tension du laser (4).

10. Dispositif supplémentaire suivant la revendication 8 ou 9, caractérisé en ce que le commutateur (13) dans la boîte à outil (6), de même que le commutateur de contrôle (9) et le capteur de position (10) dans la tête d'usinage à laser (2) sont reliés les uns aux autres dans un circuit de sécurité commun.

11. Dispositif supplémentaire suivant la revendication 8, 9 ou 10, caractérisé en ce que le commutateur (13) dans la boîte à outil (6) et/ou le commutateur de contrôle (9) et/ou le capteur de position (10) font partie d'un circuit de commande, par lequel sont commandés, en outre, les entraînements d'autres dispositifs, qui sont mis sous tension ou hors tension lors de la commutation du fonctionnement mécanique de la machine au fonctionnement laser.

12. Dispositif supplémentaire suivant l'une quelconque des revendications 8 à 11, pour une machine-outil à commande numérique avec une broche d'outil entraînée, caractérisé en ce que le commutateur (13) dans la boîte à outil (6) fait partie du circuit de commande (5) pour l'entraînement de la broche d'outil, le circuit de commande (5) ne libérant l'entraînement de la broche d'outil que lorsque le commutateur (13) est activé par la tête d'usinage à laser (2) se trouvant en position d'attente.
